# EUROPEAN PATENT APPLICATION

(11) **EP 4 647 398 A1**
(43) Date of publication of application: **12.11.2025**
(21) Application number: 24734793.3
(22) Date of filing: 10.05.2024
(51) Int. Cl.: C01B 25/37, C01B 25/45, H01M 10/0525, H01M 4/58

(54) **IRON PHOSPHATE HAVING LOW SULFUR CONTENT AND HIGH IRON-PHOSPHORUS RATIO, PREPARATION METHOD THEREFOR, AND USE THEREOF**

(30) Priority: 26.03.2024 CN 202410354078
(71) Applicant: Hubei Hongrun High-Tech New Materials Co., Ltd., Ezhou, Hubei 436070 (CN)
(72) Inventor: GUO, Miyan, Ezhou, Hubei 436070 (CN); XU, Shanwan, Ezhou, Hubei 436070 (CN); FANG, Yuanyuan, Ezhou, Hubei 436070 (CN); ZHANG, Wei, Ezhou, Hubei 436070 (CN)
(74) Representative: Casalonga
(86) International application number: PCT/CN2024/092414
(87) International publication number: WO 2025/200089

(57) **Abstract**

This disclosure provides ferric phosphate with low sulfur content and high iron to phosphorus ratio, and a preparation method and an application thereof, belonging to the technical field of battery materials. The preparation method of the ferric phosphate with low sulfur content and high iron to phosphorus ratio includes: providing an amorphous ferric phosphate; adding the amorphous ferric phosphate to water and phosphoric acid for slurrying treatment, and then heating up and aging to obtain an aged slurry; performing slurry washing and filter pressing on the aged slurry to obtain a first filter cake; adding water and a first pH regulator to the first filter cake for slurry washing to obtain a first slurry with a pH value range of 3.0-5.0, and performing filter pressing on the first slurry to obtain a second filter cake; and rinsing, drying and calcining the second filter cake to prepare the ferric phosphate with low sulfur content and high iron to phosphorus ratio. This disclosure is conducive to the preparation of a ferric phosphate with low sulfur content, high iron to phosphorus ratio and large specific surface area. The ferric phosphate can be used to prepare lithium ferric phosphate with better electrochemical performance, and the lithium ferric phosphate can be further used to prepare a cathode sheet and a secondary battery with better electrochemical performance.

## Description

### Cross-Reference to Related Disclosure

This disclosure is based on the Chinese disclosure with the CN disclosure number 202410354078.7 and disclosure date of March 26, 2024, and claims its priority. The disclosure of this CN disclosure is once again incorporated in this disclosure by reference in its entirety.

### Technical Field

The present disclosure relates to the technical field of battery materials, and specifically to ferric phosphate with low sulfur content and high iron to phosphorus ratio, a preparation method and an application thereof.

### Background

Ferric phosphate, as an important precursor of lithium ferric phosphate, its sulfur content, specific surface area, morphology, and iron to phosphorus ratio all affect the performance of lithium ferric phosphate. At present, a preparation method of ferric phosphate is to prepare amorphous ferric phosphate, adding excessive phosphoric acid and then aging with high-temperature to achieve a complete crystal transformation for obtaining ferric phosphate. However, in the case of excessive phosphoric acid, it is easy to generate by-products of acid salts such as ferric hydrogen phosphate, ferric dihydrogen phosphate, ammonium ferric sulfate and so on, thus resulting in low purity and low iron to phosphorus ratio of the product. At the same time, materials involved in the aging process of the above method, are easy to agglomerate, have wide size distributions and overhigh surface energy, which also lead to a large amount of agglomeration of the materials in the subsequent drying and calcination process, resulting in a small specific surface area of the prepared ferric phosphate.

Therefore, the ferric phosphate prepared by the existing preparation method of ferric phosphate has the problems of high sulfur content, low iron to phosphorus ratio and small specific surface area.

In view of this, this disclosure is hereby proposed.

### SUMMARY

In view of the technical problems existing in the background technology, this disclosure provides ferric phosphate with low sulfur content and high iron to phosphorus ratio, a preparation method and an application thereof, to improve or solve the technical problems mentioned in the background technology.

In a first aspect, an embodiment of this disclosure provides a preparation method of ferric phosphate with low sulfur content and high iron to phosphorus ratio, including:
providing an amorphous ferric phosphate;
adding water and phosphoric acid to the amorphous ferric phosphate for slurrying treatment, and then heating up and aging to obtain an aged slurry;
performing slurry washing and filter pressing on the aged slurry to obtain a first filter cake;
adding water and a first pH regulator to the first filter cake for slurry washing to obtain a first slurry with a pH value range of 3.0-5.0, and then performing filter pressing on the first slurry to obtain a second filter cake; and
rinsing, drying and calcining the second filter cake to prepare and obtain the ferric phosphate with low sulfur content and high iron to phosphorus ratio.

In the technical solution of the embodiment of this disclosure, performing a slurrying treatment (a first slurrying) by adding water to amorphous ferric phosphate before ageing crystals, and then performing a slurrying treatment (a second slurrying) by adding water to a first filter cake after the ageing crystal conversion is completed, and adding the first pH regulator during the second slurring or after the second slurring can avoid the addition of the first pH regulator in a high-temperature aging state causing materials to undergo phase transformation to generate basic ammonium ferric phosphate, which is conducive to reducing the surface energy of particles, so that the particles are not prone to agglomeration during the subsequent drying and calcination process. Furthermore, in this disclosure, controlling the pH value of the first slurry at 3.0-5.0 can avoid the hydrolysis of the ferric phosphate from producing iron hydroxide by-products due to an excessively high pH value, and is advantageous to avoid the problem of an excessively high iron to phosphorus ratio.

Secondly, in the technical solution of the embodiment of this disclosure, the above two slurrying processes can play a dispersing role, thereby making size distribution of particles more uniform and finer, which is conducive to increasing the reaction area between the particles and the first pH regulator, reducing the production of acid salts, improving the purity and iron to phosphorus ratio of the ferric phosphate, and reducing the sulfur content of the ferric phosphate. Therefore, the preparation method provided by this disclosure can obtain an anhydrous ferric phosphate with large specific surface area, low sulfur content, and high iron to phosphorus ratio.

In some embodiments, the step of adding water and phosphoric acid to the amorphous ferric phosphate for slurrying treatment, and then heating up and aging to obtain an aged slurry includes:
adding water and phosphoric acid to the amorphous ferric phosphate for the slurrying treatment to obtain an initial slurry; and
heating the initial slurry to 80°C-100°C, and keeping the temperature for 60 min-100 min after the initial slurry changes color to obtain the aged slurry; and
where a P/Fe molar ratio of the phosphoric acid to the amorphous ferric phosphate is 0.2:1-0.3:1.

In these embodiments, controlling an aging temperature at 80 °C-100 °C, after the initial slurry changes color, and under the condition that the aging temperature is maintained at 80°C-100°C, and keeping the temperature for 60 min-100 min allow the amorphous ferric phosphate to undergo sufficient crystal transformation. Setting the P/Fe molar ratio of the phosphoric acid to the amorphous ferric phosphate to 0.2:1-0.3:1 can avoid the problems of low product purity and low iron to phosphorus ratio caused by by-products of acid salt such as ferric hydrogen phosphate, ferric dihydrogen phosphate, ammonium ferric sulfate, and so on, produced under the condition of excessive phosphoric acid.

In some embodiments, the step of adding water and phosphoric acid to the amorphous ferric phosphate for the slurrying treatment to obtain an initial slurry includes:
adding water to the amorphous ferric phosphate for the slurrying treatment to obtain a slurry with a solid content of 15%-30%; and
adding phosphoric acid to the slurry with the solid content of 15%-30% under a stirring condition to obtain the initial slurry.

In these embodiments, adding phosphoric acid to the slurry with the solid content of 15%-30% is beneficial for achieving a better dispersion in the first slurrying process, and specifically, can improve the dispersion degree and dispersion uniformity of the crystal.

In some embodiments, a preparation method of the provided amorphous ferric phosphate includes:
dissolving by-products of titanium dioxide by adding water to obtain a mixed slurry;
adding a second pH regulator to the mixed slurry to adjust a pH value of the mixed slurry to 4.0-5.0, and then performing solid-liquid separation to obtain a ferrous sulfate solution;
mixing the ferrous sulfate solution, a phosphate salt solution, and a hydrogen peroxide solution to obtain a primary amorphous ferric phosphate; and
rinsing the primary amorphous ferric phosphate until a conductivity of its rinsing solution is less than or equal to 5 ms/cm to obtain the amorphous ferric phosphate.

In these embodiments, the amorphous ferric phosphate prepared by the above method has high purity and stability, which is conducive to obtaining crystals with both relatively uniform size and quality in the aging process.

In some embodiments, a molar ratio of phosphorus in the phosphate salt solution to iron in the ferrous sulfate solution is 1:1-1.1:1; and/or a molar ratio of hydrogen peroxide in the hydrogen peroxide solution to the iron in the ferrous sulfate solution is 0.5:1-1:1.

In these embodiments, controlling the dosages of the phosphate salt solution, the hydrogen peroxide solution and the ferrous sulfate solution is, on the one hand, beneficial to avoid excessive phosphorus reacting with impurities in ferrous sulfate to generate phosphate by-products, and is, on the other hand, beneficial to control the pH value of the synthesis process in a relatively appropriate range, so that it is conducive to reduce the impurity content in the amorphous ferric phosphate, and to make the particle size of the amorphous ferric phosphate relatively consistent.

In some embodiments, a solute in the phosphate salt solution is selected from at least one of ammonium dihydrogen phosphate and diammonium hydrogen phosphate; and/or the first pH regulator is selected from at least one of ammonium bicarbonate, ammonium carbonate, sodium bicarbonate, sodium carbonate, sodium hydroxide, and ammonia; and/or the second pH regulator is selected from at least one of ammonium bicarbonate, ammonium carbonate, sodium bicarbonate, sodium carbonate, sodium hydroxide, and ammonia.

In these embodiments, the raw materials for the phosphate salt solution, the first pH regulator, and the second pH regulator used are readily available and relatively inexpensive, which is beneficial for reducing the production cost of the ferric phosphate.

In some embodiments, the second filter cake is rinsed multiple times until a conductivity of its rinsing solution is less than or equal to 350 µs/cm, and then the second filter cake is dried and calcined to prepare and obtain the ferric phosphate with low sulfur content and high iron to phosphorus ratio.

In these embodiments, by controlling the conductivity of the second filter cake to a range of less than or equal to 350 µs/cm, a rinsed second filter cake can be obtained, which is beneficial for obtaining finished ferric phosphate products with higher purity and better consistency.

In the second aspect, an embodiment of this disclosure provides ferric phosphate with low sulfur content and high iron to phosphorus ratio, prepared using the above preparation method of a ferric phosphate; and
an iron to phosphorus ratio of the ferric phosphate with low sulfur content and high iron to phosphorus ratio is (0.977-0.991):1; and/or a sulfur content of the ferric phosphate with low sulfur content and high iron to phosphorus ratio is 18.55 ppm-32.46 ppm; and/or a specific surface area of the ferric phosphate with low sulfur content and high iron to phosphorus ratio is 10.5 m²/g-12.01 m²/g.

In the technical solution of the embodiment of this disclosure, through the method of providing an amorphous ferric phosphate; adding water and phosphoric acid to the amorphous ferric phosphate for slurrying treatment, and then heating up and aging to obtain an aged slurry; performing slurry washing and filter pressing on the aged slurry to obtain a first filter cake; adding water and a first pH regulator to the first filter cake for slurry washing to obtain a first slurry with a pH value range of 3.0-5.0, and then performing filter pressing on the first slurry to obtain a second filter cake; and rinsing, drying and calcining the second filter cake, the ferric phosphate with an iron to phosphorus ratio of (0.977-0.991):1, a sulfur content of 18.55 ppm-32.46 ppm and a specific surface area of 10.50 m²/g-12.01 m²/g is obtained.

Therefore, the ferric phosphate prepared by this disclosure can overcome the technical problems existing in the prior art and has better electrochemical performances.

Thirdly, an embodiment of this disclosure provides a cathode sheet, including a cathode current collector and a cathode active layer disposed on at least one side of the cathode current collector, where the cathode active layer includes a lithium ferric phosphate material prepared from the above ferric phosphate with low sulfur content and high iron to phosphorus ratio as a precursor.

In this embodiment, the cathode sheet includes a lithium ferric phosphate material prepared from the above ferric phosphate with low sulfur content and high iron to phosphorus ratio as a precursor, and the lithium ferric phosphate material can inherit the properties of low sulfur content, high iron to phosphorus ratio of the above ferric phosphate, thereby facilitating the acquisition of better electrochemical performances, and therefore, the cathode sheet including the lithium ferric phosphate material also has the advantage of excellent electrochemical performances.

In a fourth aspect, an embodiment of this disclosure provides a secondary battery, including the above cathode sheet.

In this embodiment, the secondary battery includes the above cathode sheet, thus having the advantage of excellent electrochemical performances.

The above description is only an overview of the technical solutions of this disclosure. In order to have a clearer understanding of the technical means of this disclosure, it can be implemented according to the content of the specification, and in order to make the above and other purposes, features, and advantages of this disclosure more obvious and easier to understand, the specific embodiments of this disclosure are specifically listed below.

### Brief Description of the Drawings

In order to provide a clearer explanation of the technical solution of this disclosure, a brief introduction will be given below to the accompanying drawings used in this disclosure. It is obvious that the accompanying drawings described below are only some embodiments of this disclosure, and for those of ordinary skill in the art, other drawings can be obtained based on these drawings without creative labor.
Fig. 1 is a diagram showing XRD images of ferric phosphate dihydrates obtained from step (8) of Embodiment 1 and step (5) of Comparative Embodiment 1 of this disclosure;
Fig. 2 is a scanning electron microscope test result diagram of an anhydrous ferric phosphate obtained from step (9) of Embodiment 1 of this disclosure; and
Fig. 3 is a scanning electron microscope test result diagram of an anhydrous ferric phosphate obtained from step (6) of Comparative Embodiment 3 in this disclosure.

### Detailed Description of the Embodiments

Embodiments of the technical solutions of this disclosure will be described in detail below in conjunction with the accompanying drawings. The following embodiments are only intended to provide a clearer explanation of the technical solutions of this disclosure, and therefore are only used as examples and cannot be used to limit the scope of protection of this disclosure.

Unless otherwise defined, all technical and scientific terms used herein have the same meanings as those commonly understood by those skilled in the art of this disclosure; the terms used in this article are only for the purpose of describing specific embodiments and are not intended to limit this disclosure; the terms "including" and "having" and any variations thereof in the description and claims, as well as the above accompanying drawing descriptions of this disclosure are intended to cover non-exclusive inclusion.

In the description of embodiments of this disclosure, the technical terms "first", "second", etc. are only used to distinguish different objects and cannot be understood as indicating or implying relative importance or implying the quantity, specific order, or primary and secondary relationship of the indicated technical features. In the description of embodiments of this disclosure, "multiple" means two or more, unless otherwise expressly and specifically defined.

References to "embodiments" herein mean that particular features, structures, or characteristics described in conjunction with the embodiments may be included in at least one embodiment of this disclosure. The phrase appearing in various places throughout the specification does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of embodiments of this disclosure, the term "and/or" is only a description of an association relationship of association objects, indicating that there can be three types of relationships, such as A and/or B, which can indicate the presence of A alone, the presence of A and B simultaneously, and the presence of B alone. In addition, the character "/" herein generally indicates that the antecedent and posterior objects of an association have an "or" relationship.

In the description of embodiments of this disclosure, the term "multiple" refers to two or more (including two), similarly, "multiple groups" refer to two or more groups (including two groups), and "multiple pieces" refer to two or more pieces (including two pieces).

In the description of embodiments of this disclosure, the orientation or positional relationship indicated by the technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential" and the like is based on the orientation or positional relationship shown in the accompanying drawings and only for facilitating the description of the embodiments of this disclosure and simplifying the description, and does not indicate or imply that the indicated device or element must have a specific orientation and be constructed and operated in a specific orientation, and therefore cannot be understood as a limitation on the embodiments of this disclosure.

In the description of embodiments of this disclosure, unless otherwise expressly specified and limited, the technical terms such as "installation", "linked", "connection", "fixation" and the like should be understood in a broad sense, for example, it can be a fixed connection, a detachable connection, or integrated; it can also be a mechanical connection or an electrical connection; and it can be directly connected or indirectly connected through an intermediate medium, and it can be an internal connection of two components or an interaction relationship between two components. For those of ordinary skill in the art, the specific meanings of the above terms in embodiments of this disclosure can be understood according to the specific circumstances.

It should be noted that all "iron to phosphorus ratio" in this disclosure document refers to "molar ratio of iron element to phosphorus element", for example, "iron to phosphorus ratio" in "ferric phosphate with low sulfur content and high iron to phosphorus ratio" refers to "molar ratio of iron element to phosphorus element".

It should be noted that "P/Fe molar ratio of the phosphoric acid to the amorphous ferric phosphate" refers to "molar ratio of phosphorus element in the phosphoric acid to iron element in the amorphous ferric phosphate".

In the prior art, sulfur content, iron to phosphorus ratio, specific surface area, and morphology are relatively important performance indicators of ferric phosphate, where the iron to phosphorus ratio is usually (0.95-0.97):1, the sulfur content is usually 100 ppm-500 ppm, and the specific surface area is usually less than 10 m²/g for ferric phosphate. At present, a preparation method of ferric phosphate is to prepare amorphous ferric phosphate, adding excessive phosphoric acid and then aging with high-temperature to achieve a complete crystal transformation for obtaining ferric phosphate. However, in the case of excessive phosphoric acid, it is easy to generate by-products of acid salts such as ferric hydrogen phosphate, ferric dihydrogen phosphate, ammonium ferric sulfate and so on, thus resulting in low purity and low iron to phosphorus ratio of the product. At the same time, materials involved in the aging process of the above method, are easy to agglomerate, have wide size distributions and overhigh surface energy, which also lead to a large amount of agglomeration of the materials in the subsequent drying and calcination process, resulting in a small specific surface area of the prepared ferric phosphate.

In order to solve the technical problems of high sulfur content, low iron to phosphorus ratio, and small specific surface area of ferric phosphate in the prior art, this disclosure provides ferric phosphate with low sulfur content and high iron to phosphorus ratio, a preparation method and an application thereof, where by adopting the specific preparation method provided in this disclosure, including a first slurrying before aging, a second slurrying after aging, and adding a first pH regulator during or after the second slurrying to control a pH value of a first slurry is controlled at 3.0-5.0, a ferric phosphate with high iron to phosphorus ratio, low sulfur content and large specific surface area can be prepared and obtained, and thus electrochemical performances of a lithium ferric phosphate material prepared from the ferric phosphate as a precursor can be improved, which in turn enhances electrochemical performances of a cathode sheet and a secondary battery.

The following further explains the scheme of this disclosure.

In a first aspect, an embodiment of this disclosure provides a preparation method of a ferric phosphate with low sulfur content and high iron to phosphorus ratio, including:
providing an amorphous ferric phosphate;
adding water and phosphoric acid to the amorphous ferric phosphate for slurrying treatment, and then heating up and aging to obtain an aged slurry;
performing slurry washing and filter pressing on the aged slurry to obtain a first filter cake;
adding water and a first pH regulator to the first filter cake for slurry washing to obtain a first slurry with a pH value range of 3.0-5.0, and then performing filter pressing on the first slurry to obtain a second filter cake; and
rinsing, drying and calcining the second filter cake to prepare and obtain the ferric phosphate with low sulfur content and high iron to phosphorus ratio.

In the technical solution of the embodiment of this disclosure, performing a slurrying treatment (a first slurrying) by adding water to amorphous ferric phosphate before ageing crystals, and then performing a slurrying treatment (a second slurrying) by adding water to a first filter cake after the ageing crystal conversion is completed, and adding the first pH regulator during the second slurring or after the second slurring can avoid the addition of the first pH regulator in a high-temperature aging state causing the materials to undergo phase transformation to generate basic ammonium ferric phosphate (the above basic ammonium ferric phosphate is prone to an ammonia odor in the sintering process), which is conducive to reducing the surface energy of particles , so that the particles are not prone to agglomeration during the subsequent drying and calcination process. Controlling the pH value of the first slurry at 3.0-5.0 can avoid the hydrolysis of the ferric phosphate from producing iron hydroxide by-products due to an excessively high pH value, and is advantageous to avoid the problem of an excessively high iron to phosphorus ratio.

Secondly, in the technical solution of the embodiment of this disclosure, the above two slurrying processes can play a dispersing role, thereby making the overall distribution of the particles more uniform and finer, which is conducive to increasing the reaction area between the particles and the first pH regulator, reducing the production of acid salts, improving the purity and iron to phosphorus ratio of the ferric phosphate, and reducing the sulfur content of the ferric phosphate. Therefore, the preparation method provided by this disclosure can obtain an anhydrous ferric phosphate with large specific surface area, low sulfur content, and high iron to phosphorus ratio.

In some embodiments, a preparation method of the provided amorphous ferric phosphate includes:
dissolving by-products of titanium dioxide by adding water to obtain a mixed slurry;
adding a second pH regulator to the mixed slurry to adjust a pH value of the mixed slurry to 4.0-5.0, and then performing solid-liquid separation to obtain a ferrous sulfate solution;
mixing the ferrous sulfate solution, a phosphate salt solution, and a hydrogen peroxide solution to obtain a primary amorphous ferric phosphate; and
rinsing the primary amorphous ferric phosphate until a conductivity of a rinsing solution is less than or equal to 5 ms/cm to obtain the amorphous ferric phosphate.

In these embodiments, the amorphous ferric phosphate prepared by the above method has high purity and stability, which is conducive to subsequent preparation of an anhydrous ferric phosphate.

In some embodiments, by-products of titanium dioxide include ferrous sulfate. For example, the by-products of titanium dioxide can be mixed with water basing on a molar concentration of Fe²⁺ of 1 mol/L-5 mol/L in the mixed slurry.

In some embodiments, the second pH regulator is exemplary but not limited, and is selected from at least one of ammonium bicarbonate, ammonium carbonate, sodium bicarbonate, sodium carbonate, sodium hydroxide, and ammonia. Using the above substances as the second pH regulator has the advantages of easy availability of raw materials, relatively low prices, and being conducive to reducing the production cost of the ferric phosphate.

In some embodiments, the mixed slurry after adjusting the pH value to 4.0-5.0 can be subject to filter pressing by a filter press for the solid-liquid separation, and the separated filtrate can be clarified by standing to obtain a ferrous sulfate solution. For example, the mixed slurry after adjusting the pH value to 5.0 can be subject to filter pressing by a filter press for the solid-liquid separation.

In some embodiments, the preparation process of the primary amorphous ferric phosphate may include: simultaneously dripping the phosphate salt solution and the hydrogen peroxide solution into the ferrous sulfate solution, and continuing the reaction after the dripping is completed to obtain the primary amorphous ferric phosphate.

For example, a molar ratio of phosphorus in the phosphate salt solution to iron in the ferrous sulfate solution can be 1:1-1.1:1, such as 1:1, 1.05:1 or 1.1:1, or any other value within the range of 1:1-1.1:1. A molar ratio of hydrogen peroxide in the hydrogen peroxide solution to the iron in the ferrous sulfate solution can be 0.5:1-1:1, such as 0.5:1, 0.6:1, 0.7:1, 0.8:1, 0.9:1, or 1:1, or any other value within the range of 0.5:1-1:1.

Controlling the dosages of the phosphate salt solution, the hydrogen peroxide solution and the ferrous sulfate solution is, on the one hand, beneficial to avoid excessive phosphorus reacting with impurities in ferrous sulfate to generate phosphate by-products, and is, on the other hand, beneficial to control the pH value of the synthesis process in a relatively appropriate range, so that it is conducive to reduce the impurity content in the amorphous ferric phosphate, and to make the particle size of the obtained amorphous ferric phosphate relatively consistent.

In some embodiments, the solute in the phosphate salt solution is exemplary but not limited, and is selected from at least one of ammonium dihydrogen phosphate and diammonium hydrogen phosphate. Using at least one of the above substances as the solute of the phosphate salt solution has the advantages of easy availability of raw materials, relatively low prices, and being conducive to reducing the production cost of the ferric phosphate.

In some embodiments, the dripping time of the phosphate salt solution and hydrogen peroxide solution can be 20 min-60 min, such as 40 min, 45 min, 50 min, 55 min, or 60 min. The time for continuing the reaction after dripping can be 1 h-2 h, such as 1 h, 1.5 h or 2 h. For example, the dripping time of the phosphate salt solution and hydrogen peroxide solution can be 50 min. The time for continuing the reaction after dripping can be 1 h.

In some embodiments, the conductivity of the rinsing solution of primary amorphous ferric phosphate after rinsing can be, for example, 5 ms/cm, 4.5 ms/cm, 4 ms/cm, 3.5 ms/cm, 3 ms/cm, 2.5 ms/cm, 2 ms/cm, 1.5 ms/cm, 1 ms/cm, or 0.5ms/cm, which is beneficial to reduce the impurity content of the amorphous ferric phosphate.

In some embodiments, the step of adding water and phosphoric acid to the amorphous ferric phosphate for slurrying treatment, and then heating up and aging to obtain an aged slurry includes:
adding water and phosphoric acid to the amorphous ferric phosphate for the slurrying treatment to obtain an initial slurry; and
heating the initial slurry to 80 °C-100 °C, and keeping the temperature for 60 min-100 min after the initial slurry changes color to obtain the aged slurry; and
where a P/Fe molar ratio of the added phosphoric acid to the amorphous ferric phosphate is 0.2:1-0.3:1.

In some embodiments, the amorphous ferric phosphate can be dispersed in water first, and then phosphoric acid can be added. Dispersion can be carried out under a stirring condition, and a stirring speed can, for example, be 400 rpm-600 rpm, such as 400 rpm, 450 rpm, 500 rpm, 550 rpm, or 600 rpm. Time for the dispersion can, for example, be 30 min-50 min, such as 30 min, 35 min, 40 min, 45 min, or 50 min.

In some embodiments, the P/Fe molar ratio of the phosphoric acid to the amorphous ferric phosphate can be set to 0.2:1, 0.25:1 or 0.3:1, or any other value within the range of 0.2:1-0.3:1. For example, the P/Fe molar ratio of the phosphoric acid to the amorphous ferric phosphate is 0.3:1.

Setting the P/Fe molar ratio of phosphoric acid to the amorphous ferric phosphate to 0.2:1-0.3:1 can avoid the problems of low product purity and low iron to phosphorus ratio caused by acid salt by-products such as ferric hydrogen phosphate, ferric dihydrogen phosphate and ammonium ferric sulfate produced under the condition of excessive phosphoric acid. Setting the P/Fe molar ratio of the phosphoric acid to the amorphous ferric phosphate to 0.3:1 can obtain better results.

In some embodiments, the step of adding water and phosphoric acid to the amorphous ferric phosphate for the slurrying treatment to obtain an initial slurry includes:
adding water to the amorphous ferric phosphate for the slurrying treatment to obtain a slurry with a solid content of 15%-30%; and
adding phosphoric acid to the slurry with the solid content of 15%-30% under a stirring condition to obtain the initial slurry.

The solid content of the slurry can be 15%-30%, such as 15%, 18%, 20%, 22%, 25%, 28%, or 30%, or any other value within the range of 15%-30%.

Adding phosphoric acid to the slurry with the solid content of 15%-30% is beneficial for achieving a better dispersion effect in the first slurrying process, such as improving the dispersion degree and dispersion uniformity of large-particle and small-particle crystals.

In some embodiments, an aging temperature can be controlled at 80°C-100°C, i.e., the initial slurry can be heated to 80 °C, 85 °C, 90 °C, 95 °C, or 100 °C, or any other value within the range of 80-100 °C. Controlling the aging temperature within the above range achieves crystal transformation of the amorphous ferric phosphate. For example, the aging temperature can be 90 °C.

In some embodiments, temperature holding time after the initial slurry changes color can be 60 min, 65 min, 70 min, 75 min, 80 min, 85 min, 90 min, 95 min, or 100 min, or any other value within the range of 60 min-100 min. Keeping the temperature for another 60 min-100 min after the initial slurry changes color ensures that the amorphous ferric phosphate undergoes sufficient crystal transformation and the yield can be improved. For example, the temperature is kept for another 100 min after the initial slurry changes color.

In some embodiments, the time of slurry washing of the aged slurry can be one time or multiple times, for example, two times, three times, four times, or more times. Correspondingly, one filter pressing can be performed after each slurry washing. For example, the solid content of slurry washing can be 15%-30%. For example, slurry washing can be performed under a stirring condition (a stirring speed can be 400 rpm-600 rpm). For example, the time for slurry washing can be 30 min-50 min.

It can be understood that performing slurry washing on the aged slurry is, on the one hand, beneficial for the dispersion of particles, and on the other hand, beneficial for washing away impurities.

In some embodiments, after the aged slurry is subject to slurry washing and filter pressing, the mother liquor obtained from the filter pressing can be recycled for reuse.

In some embodiments, in the process of obtaining the first slurry, the dosage relationship between the first filter cake and water satisfies that the solid content of the first slurry is 15%-30%, such as 15%, 18%, 20%, 22%, 25%, 28%, or 30%.

In some embodiments, the first filter cake can be dispersed in water first, and then the first pH regulator can be added. The dispersion of the first filter cake in water can be carried out under a stirring condition, and a stirring speed can, for example, be 400 rpm-600 rpm, such as 400 rpm, 450 rpm, 500 rpm, 550 rpm, or 600 rpm. Time for the dispersion can, for example, be 30 min-50 min, such as 30 min, 35 min, 40 min, 45 min, or 50 min.

In some embodiments, the first pH regulator is exemplary but not limited, and is selected from at least one of ammonium bicarbonate, ammonium carbonate, sodium bicarbonate, sodium carbonate, sodium hydroxide, and ammonia. The raw materials of the first pH regulator are easy to obtain and the prices are relatively cheap, which is conducive to reducing the production cost of the ferric phosphate.

In some embodiments, the pH value of the first slurry can be 3.0, 3.5, 4.0, 4.5, or 5.0, or any other value within the range of 3.0-5.0. Controlling the pH value of the first slurry at 3.0-5.0 can avoid the hydrolysis of the ferric phosphate to produce ferric hydroxide by-products due to an excessively high pH value, and is advantageous to avoid an excessively high iron to phosphorus ratio. For example, the pH value of the first slurry can be controlled at 3.5-4.5.

In some embodiments, the time the second filter cake is rinsed can be only 1 time, or can be multiple times, such as 2 times, 3 times, 4 times, or more times, as long as the conductivity of the rinsing solution after rinsing is less than or equal to 350 µs/cm.

By controlling the conductivity of the second filter cake to a range of less than or equal to 350 µs/cm, a rinsed second filter cake can be obtained, which is beneficial for obtaining finished ferric phosphate products with higher purity and better consistency.

In some embodiments, the second filter cake after rinsing can be dried at a temperature of 100 °C-200 °C (such as 100 °C, 120 °C, 150 °C, 180 °C, or 200 °C) for 0.5 h-1 h (such as 0.5 h, 0.8 h or 1 h), and specific methods such as flash drying can be used. After drying, the calcination can be carried out at a temperature of 500 °C-700 °C (such as 500 °C, 550 °C, 600 °C, 650 °C, or 700 °C) for 2 h-3 h (such as 2 h, 2.5 h or 3 h).

In a second aspect, an embodiment of this disclosure provides a ferric phosphate with low sulfur content and high iron to phosphorus ratio, prepared using the above preparation method of a ferric phosphate. An iron to phosphorus ratio of the ferric phosphate with low sulfur content and high iron to phosphorus ratio is (0.977-0.991):1, and/or sulfur content is 18.55 ppm-32.46 ppm, and/or specific surface area is 10.50 m²/g-12.01 m²/g.

In the technical solution of the embodiment of this disclosure, through the method of providing an amorphous ferric phosphate; adding water and phosphoric acid to the amorphous ferric phosphate for slurrying treatment, and then heating up and aging to obtain an aged slurry; performing slurry washing and filter pressing on the aged slurry to obtain a first filter cake; adding water and a first pH regulator to the first filter cake for slurry washing to obtain a first slurry with a pH value range of 3.0-5.0, and then performing filter pressing on the first slurry to obtain a second filter cake; and rinsing, drying and calcining the second filter cake, the ferric phosphate with an iron to phosphorus ratio of (0.977-0.991):1, a sulfur content of 18.55 ppm-32.46 ppm and a specific surface area of 10.50 m²/g-12.01 m²/g is prepared.

Therefore, the ferric phosphate prepared by this disclosure can overcome the technical problems existing in the prior art and has better electrochemical performances.

In addition, in some embodiments, the obtained ferric phosphate is a pure-phase ferric phosphate with high purity, in addition to having high iron to phosphorus ratio, low sulfur content, and large specific surface area.

In a third aspect, an embodiment of this disclosure provides a cathode sheet, including a cathode current collector and a cathode active layer disposed on at least one side of the cathode current collector, where the cathode active layer includes a lithium ferric phosphate material prepared from the above ferric phosphate with low sulfur content and high iron to phosphorus ratio as a precursor.

In this embodiment, the cathode sheet includes a lithium ferric phosphate material prepared from the above ferric phosphate with low sulfur content and high iron to phosphorus ratio as a precursor, and the lithium ferric phosphate material can inherit the characteristics of low sulfur content, high iron to phosphorus ratio of the above ferric phosphate, thereby facilitating the acquisition of better electrochemical performances, and therefore, the cathode sheet including lithium ferric phosphate also has the advantage of excellent electrochemical performance.

In a fourth aspect, an embodiment of this disclosure provides a secondary battery, including the above cathode sheet.

In this embodiment, the secondary battery includes the above cathode sheet, thus having the advantage of excellent electrochemical performances.

Some specific embodiments are enumerated below, and it should be noted that the embodiments described below are exemplary and are only intended to explain this disclosure, and cannot be understood as limitations to this disclosure. If no specific technology or conditions are specified in the embodiments, the technology or conditions described in the literature in the art or the product instructions shall be followed. The reagents or instruments used without specifying the manufacturer are conventional products that can be commercially purchased.

### 1. Preparation methods

### Embodiment 1

This embodiment provided ferric phosphate with low sulfur content and high iron to phosphorus ratio, and the preparation method of the ferric phosphate included:
Step (1): dissolving by-products of titanium dioxide containing ferrous sulfate in water to obtain a mixed slurry with a molar concentration of Fe²⁺ ions of 1.5 mol/L;
Step (2): adding the above mixed slurry to ammonium bicarbonate to adjust a pH value of the mixed slurry to 5, then performing filter pressing by a filter press, and clarifying the filtrate obtained from the filter pressing by standing to obtain a ferrous sulfate solution;
Step (3): dripping ammonium dihydrogen phosphate and a hydrogen peroxide solution into the above ferrous sulfate solution simultaneously, with a dripping time of 50 minutes, where a molar ratio of phosphorus in the phosphate salt solution to iron in the ferrous sulfate solution was 1:1, and a molar ratio of hydrogen peroxide in the hydrogen peroxide solution to the iron in the ferrous sulfate solution was 1:1, and after the dripping was completed, continuing the reaction for 1 h to obtain a primary amorphous ferric phosphate;
Step (4): performing filter pressing and rinsing on the primary amorphous ferric phosphate until a conductivity of a rinsing solution is 5 ms/cm to obtain an amorphous ferric phosphate;
Step (5): adding water to the amorphous ferric phosphate in a proportion of 20% solid content, performing slurrying dispersion at a stirring speed of 500 rpm for 40 min (first slurrying process), then adding phosphoric acid with a molar ratio of P:Fe=0.3:1, elevating the temperature to 90 °C, and keeping the temperature for 100 min after the change of color to obtain an aged slurry;
Step (6): pressing filter the aged slurry, adding the filtered filter cake to water in a proportion of 20% solid content for slurry washing, where the slurry washing process was carried out at a stirring speed of 500 rpm for 40 min, and after washing, returning to the filter press for filter pressing to obtain a first filter cake and mother liquor, where the mother liquor obtained from filter pressing could be collected for recycling;
Step (7): adding water to the first filter cake in a proportion of 20% solid content, and performing slurrying dispersion at a stirring speed of 500 rpm for 40 min (second slurry process), then adding ammonium bicarbonate to obtain a first slurry with a pH value of 4, returning the first slurry to the filter press for filter pressing to obtain a second filter cake;
Step (8): rinsing the second filter cake for multiple times until a conductivity of its rinsing solution is 350 µs/cm to obtain a ferric phosphate dihydrate;
Step (9): drying the ferric phosphate dihydrate at 150 °C for 1 h to obtain a dried material; and calcining the dried material at 600°C for 2 h to obtain the anhydrous ferric phosphate.

### Embodiment 2

This embodiment provided ferric phosphate with low sulfur content and high iron to phosphorus ratio, and the preparation method of the ferric phosphate included:
Steps (1) to (4): same as Steps (1) to (4) in Embodiment 1;
Step (5): adding water to the amorphous ferric phosphate in a proportion of 15% solid content, performing slurrying dispersion at a stirring speed of 400 rpm for 30 min (first slurrying process), then adding phosphoric acid with a molar ratio of P:Fe=0.3:1, elevating the temperature to 90 °C, and keeping the temperature for 100 min after the change of color to obtain an aged slurry;
Step (6): pressing filter the aged slurry, adding the filtered filter cake to water in a proportion of 15% solid content for slurry washing, where the slurry washing process was carried out at a stirring speed of 400 rpm for 30 min, and after washing, returning to the filter press for filter pressing to obtain a first filter cake and mother liquor, where the mother liquor obtained from filter pressing could be collected for recycling;
Step (7): adding a fixed amount of water to the first filter cake in a proportion of 15% solid content, and performing slurrying dispersion at a stirring speed of 400 rpm for 30 min (second slurry process), then adding ammonium bicarbonate to obtain a first slurry with a pH value of 5, returning the first slurry to the filter press for filter pressing to obtain a second filter cake; and
Steps (8) and (9): same as Steps (8) and (9) in Embodiment 1 to finally prepare the anhydrous ferric phosphate.

### Embodiment 3

This embodiment provided ferric phosphate with low sulfur content and high iron to phosphorus ratio, and the preparation method of the ferric phosphate included:
Steps (1) to (4): same as Steps (1) to (4) in Embodiment 1;
Step (5): adding water to the amorphous ferric phosphate in a proportion of 30% solid content, performing slurrying dispersion at a stirring speed of 600 rpm for 50 min (first slurrying process), then adding phosphoric acid with a molar ratio of P:Fe=0.3:1, elevating the temperature to 90 °C, and keeping the temperature for 100 min after the change of color to obtain an aged slurry;
Step (6): pressing filter the aged slurry, adding the filtered filter cake to water in a proportion of 30% solid content for slurry washing, where the slurry washing process was carried out at a stirring speed of 600 rpm for 50 min, and after washing, returning to the filter press for filter pressing to obtain a first filter cake and mother liquor, where the mother liquor obtained from filter pressing could be collected for recycling;
Step (7): adding water to the first filter cake in a proportion of 30% solid content, and performing slurrying dispersion at a stirring speed of 600 rpm for 50 min (second slurry process), then adding ammonium bicarbonate to obtain a first slurry with a pH value of 3, returning the first slurry to the filter press for filter pressing to obtain a second filter cake; and
Steps (8) and (9): same as Steps (8) and (9) in Embodiment 1 to finally prepare the anhydrous ferric phosphate.

### Embodiment 4

The difference between this embodiment and Embodiment 1 was that ammonium bicarbonate in Step (7) was replaced with sodium hydroxide to obtain a second filter cake and finally prepare the anhydrous ferric phosphate.

### Embodiment 5

The difference between this embodiment and Embodiment 1 was that ammonium bicarbonate in Step (7) was replaced with ammonia to obtain a second filter cake and finally prepare the anhydrous ferric phosphate.

### Embodiment 6

The difference between this embodiment and Embodiment 1 was that ammonium bicarbonate in Step (7) was replaced with ammonium carbonate to obtain a second filter cake and finally prepare the anhydrous ferric phosphate.

### Embodiment 7

The difference between this embodiment and Embodiment 1 was that ammonium bicarbonate in Step (7) was replaced with sodium bicarbonate to obtain a second filter cake and finally prepare the anhydrous ferric phosphate.

### Embodiment 8

The difference between this embodiment and Embodiment 1 was that ammonium bicarbonate in Step (7) was replaced with sodium carbonate to obtain a second filter cake and finally prepare the anhydrous ferric phosphate.

### Embodiment 9

The difference between this embodiment and Embodiment 1 was that in Step (5), a P/Fe molar ratio of the added phosphoric acid to the amorphous ferric phosphate was 0.2:1 to obtain an aged slurry and finally prepare the anhydrous ferric phosphate.

### Embodiment 10

The difference between this embodiment and Embodiment 1 was that in Step (5), a P/Fe molar ratio of the added phosphoric acid to the amorphous ferric phosphate was 0.15:1 to obtain an aged slurry and finally prepare the anhydrous ferric phosphate.

### Embodiment 11

The difference between this embodiment and Embodiment 1 was that in Step (5), a P/Fe molar ratio of the added phosphoric acid to the amorphous ferric phosphate was 0.35:1 to obtain an aged slurry and finally prepare the anhydrous ferric phosphate.

### Embodiment 12

The difference between this embodiment and Embodiment 1 was that in Step (3), a molar ratio of hydrogen peroxide in the hydrogen peroxide solution to iron in the ferrous sulfate solution was 0.5:1 to obtain a primary amorphous ferric phosphate and finally prepare the anhydrous ferric phosphate.

### Embodiment 13

The difference between this embodiment and Embodiment 1 was that in Step (3), a molar ratio of hydrogen peroxide in the hydrogen peroxide solution to iron in the ferrous sulfate solution was 0.8:1 to obtain a primary amorphous ferric phosphate and finally prepare the anhydrous ferric phosphate.

### Embodiment 14

The difference between this embodiment and Embodiment 1 was that in Step (3), a molar ratio of hydrogen peroxide in the hydrogen peroxide solution to iron in the ferrous sulfate solution was 0.48:1 to obtain a primary amorphous ferric phosphate and finally prepare the anhydrous ferric phosphate.

### Embodiment 15

The difference between this embodiment and Embodiment 1 was that in Step (3), a molar ratio of hydrogen peroxide in the hydrogen peroxide solution to iron in the ferrous sulfate solution was 1.1:1 to obtain a primary amorphous ferric phosphate and finally prepare the anhydrous ferric phosphate.

### Embodiment 16

The difference between this embodiment and Embodiment 1 was that in Step (3), a molar ratio of phosphorus in the phosphate salt solution to iron in the ferrous sulfate solution was 1.1:1.

### Embodiment 17

The difference between this embodiment and Embodiment 1 was that in Step (3), a molar ratio of phosphorus in the phosphate salt solution to iron in the ferrous sulfate solution was 0.9:1.

### Embodiment 18

The difference between this embodiment and Embodiment 1 was that in Step (7), ammonium bicarbonate was added to obtain the first slurry with a pH value of 3.5; the first slurry was returned to the filter press for filter pressing to obtain a second filter cake and finally prepare the anhydrous ferric phosphate.

### Embodiment 19

The difference between this embodiment and Embodiment 1 was that in Step (7), ammonium bicarbonate was added to obtain the first slurry with a pH value of 4.5; the first slurry was returned to the filter press for filter pressing to obtain a second filter cake and finally prepare the anhydrous ferric phosphate.

### Embodiment 20

The difference between this embodiment and Embodiment 1 was that in Step (7), ammonium bicarbonate was added to obtain the first slurry with a pH value of 3; the first slurry was returned to the filter press for filter pressing to obtain a second filter cake and finally prepare the anhydrous ferric phosphate.

### Embodiment 21

The difference between this embodiment and Embodiment 1 was that in Step (7), ammonium bicarbonate was added to obtain the first slurry with a pH value of 5; the first slurry was returned to the filter press for filter pressing to obtain a second filter cake and finally prepare the anhydrous ferric phosphate.

### Comparative embodiment 1

This comparative embodiment provided a ferric phosphate with low sulfur content and high iron to phosphorus ratio, and the preparation method of the ferric phosphate included:
Steps (1) to (4): same as Steps (1) to (4) in Embodiment 1;
Step (5): adding water to the amorphous ferric phosphate with a solid content of 20%, performing slurrying dispersion at a stirring speed of 500 rpm for 40 min (first slurrying process), then adding phosphoric acid with a molar ratio of P:Fe=0.3:1, elevating the temperature to 90 °C, keeping the temperature for 100 min after the change of color, adding ammonium bicarbonate to adjust the pH to 4, and after aging, performing filter pressing and washing to a conductivity of 350 µs/cm to obtain a ferric phosphate dihydrate; and
Step (6): Same as Step (9) in Embodiment 1 to finally prepare the anhydrous ferric phosphate.

### Comparative embodiment 2

The difference between this comparative embodiment and Embodiment 1 was that the pH value of the first slurry in Step (7) of Embodiment 1 was adjusted to 6 to obtain a second filter cake and finally prepare the anhydrous ferric phosphate.

### Comparative embodiment 3

This comparative embodiment provided a ferric phosphate with low sulfur content and high iron to phosphorus ratio, and the preparation method of the ferric phosphate included:
Steps (1) to (4): same as Steps (1) to (4) in Embodiment 1;
Step (5): adding water to the amorphous ferric phosphate with a solid content of 20%, performing slurrying dispersion at a stirring speed of 500 rpm for 40 min (first slurrying process), then adding phosphoric acid with a molar ratio of P:Fe=0.3:1, elevating the temperature to 90 °C, keeping the temperature for 100 min after the change of color, and after aging, performing filter pressing and washing to a conductivity of 350 µs/cm to obtain a ferric phosphate dihydrate; and
Step (6): Same as Step (9) in Embodiment 1 to finally prepare the anhydrous ferric phosphate.

### Comparative embodiment 4

The difference from Embodiment 1 was Step (7): adding ammonium bicarbonate to obtain the first slurry with a pH value of 2; returning the first slurry to the filter press for filter pressing to obtain a second filter cake and finally prepare the anhydrous ferric phosphate.

### 2. Test methods and results

### 1. Property test of ferric phosphate materials

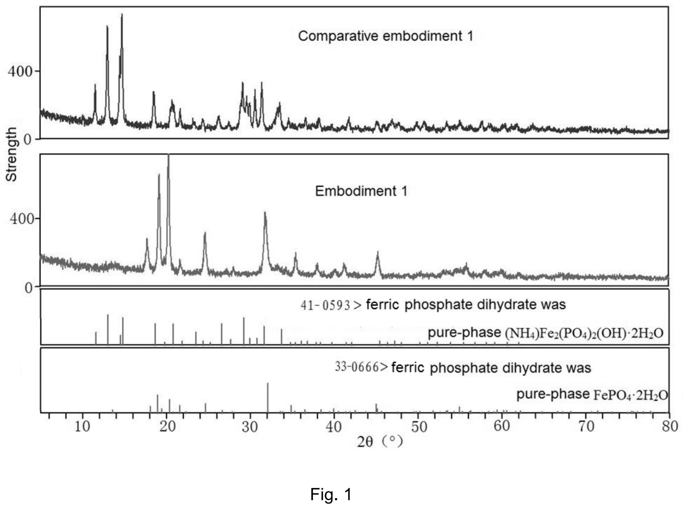

The ferric phosphate dihydrate obtained from Step (8) of Embodiment 1 and the ferric phosphate dihydrate obtained from Comparative embodiment 1 were respectively tested by XRD, and the results were shown in Fig. 1.

From Fig. 1, it could be seen that in Embodiment 1, after the aging was completed, filter pressing and slurry washing were performed, after filter pressing, ammonium bicarbonate is added by slurrying to adjust the pH value to 4, then filter pressing and rinsing were continued until the conductivity was 350 µs/cm, and the ferric phosphate dihydrate obtained at this time was pure-phase FePO₄·2H₂O; compared with the Comparative embodiment 1, ammonium bicarbonate was added at a high temperature during the aging process to adjust the pH to 4, when the temperature was very high and crystal transformation was easy to occur in an alkaline environment, and therefore, the ferric phosphate dihydrate obtained at this time was pure-phase (NH₄)Fe₂(PO₄)₂(OH)·2H₂O, which emitted an ammoniacal odor during the sintering process.

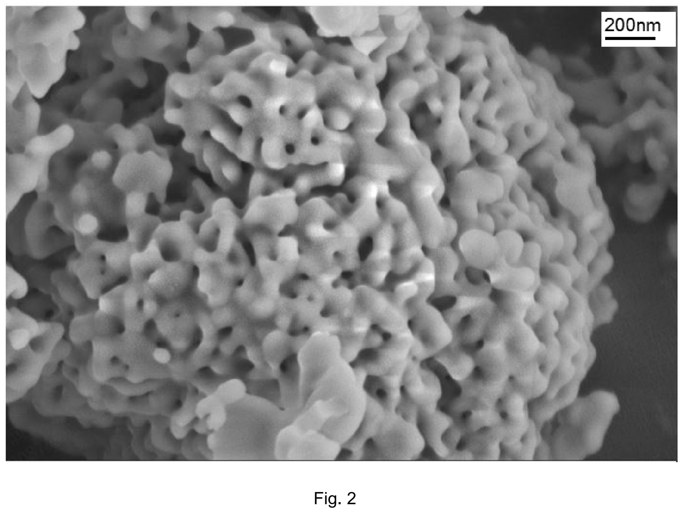

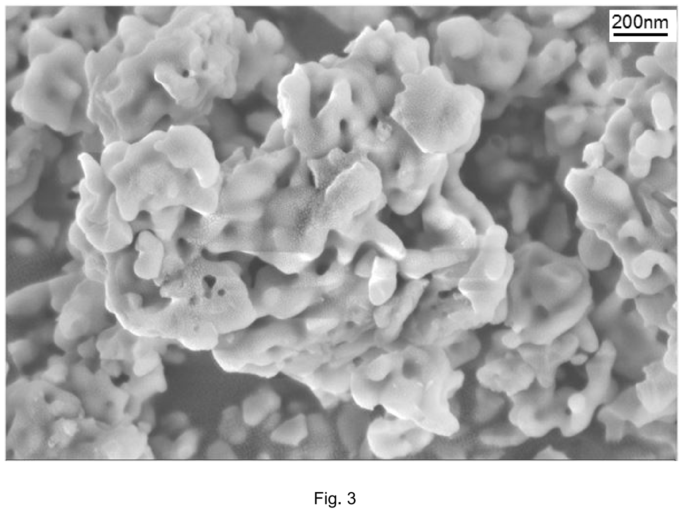

In addition, the anhydrous ferric phosphate obtained from Step (9) of Embodiment 1 and the anhydrous ferric phosphate obtained from Step (6) of Comparative embodiment 3 were subject to a scanning electron microscope test, and the results (SEM images) were shown in Figs. 2 and 3.

From the comparison between Fig. 2 and Fig. 3, it could be seen that the anhydrous ferric phosphate obtained from Embodiment 1 had more uniform particles compared with the anhydrous ferric phosphate obtained from Comparative embodiment 3, and there were pores between particles, while the anhydrous ferric phosphate obtained from Comparative embodiment 3 had obvious particle aggregation and was denser. This result corresponded to the specific surface area in Table 1 below, showing the specific surface area of anhydrous ferric phosphate obtained from Embodiment 1 was larger than that obtained from Comparative embodiment 3. It could be seen that after the aging process, filter pressing and slurry washing were performed, and filter pressing was performed again before slurrying dispersion was continued, which was conducive to evenly dispersing particles. At the same time, adding alkali to adjust the pH to 4 reduced the generation of acid salts, decreased surface energy, and effectively reduced agglomeration between particles. This could obtain an anhydrous ferric phosphate with uniform size, loose porosity and large specific surface area. Furthermore, the electrochemical performances of the lithium ferric phosphate cathode material prepared by using the anhydrous ferric phosphate obtained from Embodiment 1 were also improved.

Furthermore, in this disclosure, the element content and specific surface area of the anhydrous ferric phosphate obtained from Embodiments 1-21 and Comparative embodiments 1-4 were tested, and the results were shown in Table 1.

The sulfur content was detected using an infrared carbon-sulfur analyzer, the specific surface area was detected using a nitrogen adsorption method with a specific surface area tester, the iron content was detected using a potassium dichromate titration method, and the phosphorus content was detected using a quinoline phosphomolybdate gravimetric method.

**Table 1 Performance indicators of anhydrous ferric phosphates in different embodiments and comparative embodiments**

| Test item | Fe (%) | P (%) | Fe:P | S (ppm) | Specific surface area (m²/g) |
|---|---|---|---|---|---|
| Embodiment 1 | 36.55 | 20.69 | 0.980 | 20.21 | 10.50 |
| Embodiment 2 | 36.65 | 20.62 | 0.986 | 18.55 | 11.23 |
| Embodiment 3 | 36.44 | 20.65 | 0.979 | 30.23 | 10.73 |
| Embodiment 4 | 36.68 | 20.70 | 0.982 | 31.21 | 11.42 |
| Embodiment 5 | 36.67 | 20.52 | 0.991 | 32.46 | 12.01 |
| Embodiment 6 | 36.48 | 20.71 | 0.977 | 29.01 | 11.67 |
| Embodiment 7 | 36.62 | 20.70 | 0.981 | 28.68 | 11.89 |
| Embodiment 8 | 36.59 | 20.74 | 0.978 | 23.88 | 10.86 |
| Embodiment 9 | 36.47 | 20.63 | 0.983 | 24.76 | 11.25 |
| Embodiment 10 | 36.53 | 20.64 | 0.982 | 26.27 | 10.57 |
| Embodiment 11 | 36.51 | 20.72 | 0.977 | 23.15 | 11.21 |
| Embodiment 12 | 36.48 | 20.60 | 0.982 | 18.23 | 10.67 |
| Embodiment 13 | 36.62 | 20.56 | 0.988 | 26.76 | 11.09 |
| Embodiment 14 | 36.56 | 20.72 | 0.978 | 32.32 | 10.56 |
| Embodiment 15 | 36.37 | 20.58 | 0.98 | 30.33 | 10.79 |
| Embodiment 16 | 36.51 | 20.64 | 0.981 | 19.08 | 11.38 |
| Embodiment 17 | 36.64 | 20.51 | 0.991 | 28.45 | 12.00 |
| Embodiment 18 | 36.35 | 20.59 | 0.979 | 23.34 | 10.86 |
| Embodiment 19 | 36.47 | 20.63 | 0.98 | 27.87 | 10.67 |
| Embodiment 20 | 36.48 | 20.69 | 0.978 | 31.99 | 11.20 |
| Embodiment 21 | 36.49 | 20.71 | 0.977 | 25.54 | 11.89 |
| Comparative embodiment 1 | 36.34 | 20.77 | 0.970 | 120.93 | 6.24 |
| Comparative embodiment 2 | 36.88 | 20.33 | 1.010 | 32.11 | 13.61 |
| Comparative embodiment 3 | 36.04 | 20.77 | 0.962 | 87.54 | 8.90 |
| Comparative embodiment 4 | 36.28 | 20.74 | 0.97 | 32.13 | 9.5 |

From Table 1, it could be seen that:
(1) the iron to phosphorus ratio results of the ferric phosphate prepared in the embodiments were within the range of (0.977-0.991):1, which were higher than those in Comparative embodiments 1 and 3, indicating that adding alkali after aging, filter pressing and rinsing could effectively neutralize acids and salts, and improve the iron to phosphorus ratio;
(2) the iron to phosphorus ratio results of the ferric phosphate prepared in the embodiments were lower than Comparative embodiment 2, and the iron to phosphorus ratio of the ferric phosphate prepared in Comparative embodiment 2 was greater than 1. Therefore, it is inferred that the iron was not simply iron in the ferric phosphate, but also in a small number of other iron compounds, which was possibly iron hydroxide. It was indicated that when the pH value was adjusted to 6, an excessive pH value would easily lead to hydrolysis of the ferric phosphate and produce iron hydroxide as a by-product;
(3) the specific surface area results of the ferric phosphate prepared in the embodiments were in the range of 10.50 m²/g-12.01 m²/g, which were higher than that of Comparative embodiments 1 and 3. On the one hand, the large particles were dispersed by slurrying twice, resulting in a relatively uniform particle distribution. On the other hand, alkali was added for adjustment, eliminating acid salts and reducing the surface energy of particles, so that it was not easy to agglomerate during the drying and calcination process;
(4) the specific surface area of ferric phosphate prepared in Comparative embodiment 2 was very large, i.e. 13.61 m²/g, mainly because the over high pH value would easily lead to the hydrolysis of the ferric phosphate, resulting in ferric hydroxide by-products, and the colloidal particles of ferric oxide were very small; and
(5) the sulfur content of the ferric phosphate product prepared in the embodiments and Comparative embodiment 2 were relatively low, indicating that the large particles were dispersed and turned into smaller particles by slurrying twice, and the addition of alkali could effectively eliminate acid salts and reduce sulfur adsorption.

### 2. Property test of CR2032 button-type half cells assembled with cathode sheets

The anhydrous ferric phosphates obtained from Embodiments 1-21 and Comparative embodiments 1-4 were respectively prepared into cathode sheets according to the following methods, and then the obtained cathode sheets were assembled into CR2032 button-type half cells, respectively, and the performance of the obtained CR2032 button-type half cells was tested, respectively.

Preparation method: first, the ferric phosphate prepared in the above embodiments and comparative embodiments and lithium sources were sintered to obtain the corresponding lithium ferric phosphate cathode materials, then mixing the prepared lithium ferric phosphate cathode materials respectively with conductive carbon powder and a PVDF binder according to a mass ratio of 90:5:5, homogenizing and coating on an aluminum foil, rolling with a roller machine after drying at 100 °C, then preparing a sheet with a diameter of 14 mm with a dissolving tablet, weighing and deducting the mass of the aluminum foil to obtain the mass of an active material.

After drying the cathode sheet, the CR2032 button-type half cell was assembled in a UNlab inert gas glove box from MBraun Company in Germany. Assembly was performed in order of an anode shell, a lithium sheet, an electrolyte, a diaphragm, an electrolyte, cathode sheet, a gasket, an elastic sheet, and a cathode shell. The electrochemical performance of the above CR2032 button-type half battery was tested by a CT2001A battery test system from Wuhan LAND Electronic Co., Ltd, with a voltage range of 2.0-4.6 V. The test results were shown in Table 2.

**Table 2 Test Results of CR2032 button-type half cells in different embodiments and comparative embodiments**

| Embodiment/comparative embodiment | 0.1 C charge specific capacity (mAh/g) | 0.1 C discharge specific capacity (mAh/g) |
|---|---|---|
| Embodiment 1 | 159.0 | 158.0 |
| Embodiment 2 | 160.0 | 158.0 |
| Embodiment 3 | 161.0 | 157.5 |
| Embodiment 4 | 161.3 | 158.4 |
| Embodiment 5 | 160.5 | 159.3 |
| Embodiment 6 | 160.1 | 157.8 |
| Embodiment 7 | 159.6 | 157.3 |
| Embodiment 8 | 161.5 | 159.7 |
| Embodiment 9 | 161.1 | 159.8 |
| Embodiment 10 | 161.0 | 156.5 |
| Embodiment 11 | 161.2 | 156.8 |
| Embodiment 12 | 161.9 | 159.7 |
| Embodiment 13 | 159.9 | 160.1 |
| Embodiment 14 | 159.9 | 156.1 |
| Embodiment 15 | 159.5 | 156.3 |
| Embodiment 16 | 160.8 | 159.8 |
| Embodiment 17 | 159.5 | 155.1 |
| Embodiment 18 | 161.4 | 161.4 |
| Embodiment 19 | 161.5 | 161.3 |
| Embodiment 20 | 159.1 | 157.0 |
| Embodiment 21 | 159.3 | 157.3 |
| Comparative embodiment 1 | 160.1 | 153.3 |
| Comparative embodiment 2 | 155.8 | 150.2 |
| Comparative embodiment 3 | 157.4 | 140.9 |
| Comparative embodiment 4 | 154.8 | 150.1 |

From Table 2, it could be seen that in this disclosure, the CR2032 button-type half cell corresponding to the ferric phosphate provided in the above embodiments could have a higher 0.1 C charge specific capacity and 0.1 C discharge specific capacity than the CR2032 button-type half cell corresponding to the ferric phosphate provided in the comparative embodiments.

In summary, this disclosure is beneficial for the preparation of a ferric phosphate with low sulfur content, high iron to phosphorus ratio, large specific surface area, and high purity. The ferric phosphate can be used to prepare lithium ferric phosphate with better electrochemical performances, and the lithium ferric phosphate can be further used to prepare a cathode sheet and a secondary battery with better electrochemical performances.

It should be noted that this disclosure is not limited to the above embodiments. The above embodiments are only examples, and all embodiments that have substantially the same composition and play the same role and effect as the technical thought within the scope of the technical solutions of this disclosure are included in the technical scope of this disclosure. In addition, within the scope of not deviating from the main idea of this disclosure, other manners constructed by applying various variations that can be thought of by those skilled in the art to the embodiments and combining some constituents of the embodiments are also included in the scope of this disclosure.

## Claims

1. A preparation method of ferric phosphate with low sulfur content and high iron to phosphorus ratio, comprising:
providing an amorphous ferric phosphate;
adding water and phosphoric acid to the amorphous ferric phosphate for slurrying treatment, and then heating up and aging to obtain an aged slurry;
performing slurry washing and filter pressing on the aged slurry to obtain a first filter cake;
adding water and a first pH regulator to the first filter cake for slurry washing to obtain a first slurry with a pH value range of 3.0-5.0, and then performing filter pressing on the first slurry to obtain a second filter cake; and
rinsing, drying and calcining the second filter cake to prepare and obtain the ferric phosphate with low sulfur content and high iron to phosphorus ratio.

2. The preparation method of ferric phosphate with low sulfur content and high iron to phosphorus ratio according to claim 1, wherein the step of adding water and phosphoric acid to the amorphous ferric phosphate for slurrying treatment, and then heating up and aging to obtain an aged slurry comprises:
adding the amorphous ferric phosphate to water and phosphoric acid for the slurrying treatment to obtain an initial slurry; and
heating the initial slurry to 80 °C-100 °C, and keeping the temperature for 60 min-100 min after the initial slurry changes color to obtain the aged slurry; and
wherein a P/Fe molar ratio of the phosphoric acid to the amorphous ferric phosphate is 0.2:1-0.3:1.

3. The preparation method of ferric phosphate with low sulfur content and high iron to phosphorus ratio according to claim 2, wherein the step of adding water and phosphoric acid to the amorphous ferric phosphate for the slurrying treatment to obtain an initial slurry comprises:
adding the amorphous ferric phosphate to water for the slurrying treatment to obtain a slurry with a solid content of 15%-30%; and
adding phosphoric acid to the slurry with the solid content of 15%-30% under a stirring condition to obtain the initial slurry.

4. The preparation method of ferric phosphate with low sulfur content and high iron to phosphorus ratio according to claim 1, wherein a preparation method of the amorphous ferric phosphate comprises:
dissolving by-products of titanium dioxide by adding water to obtain a mixed slurry;
adding a second pH regulator to the mixed slurry to adjust a pH value of the mixed slurry to 4.0-5.0, and then performing solid-liquid separation to obtain a ferrous sulfate solution;
mixing the ferrous sulfate solution, a phosphate salt solution, and a hydrogen peroxide solution to obtain a primary amorphous ferric phosphate; and
rinsing the primary amorphous ferric phosphate until a conductivity of its rinsing solution is less than or equal to 5 ms/cm to obtain the amorphous ferric phosphate.

5. The preparation method of ferric phosphate with low sulfur content and high iron to phosphorus ratio according to claim 4, wherein a molar ratio of phosphorus in the phosphate salt solution to iron in the ferrous sulfate solution is 1:1-1.1:1;
and/or a molar ratio of hydrogen peroxide in the hydrogen peroxide solution to iron in the ferrous sulfate solution is 0.5:1-1:1.

6. The preparation method of ferric phosphate with low sulfur content and high iron to phosphorus ratio according to claim 4 or 5, wherein a solute in the phosphate salt solution is selected from at least one of ammonium dihydrogen phosphate and diammonium hydrogen phosphate;
and/or the first pH regulator is selected from at least one of ammonium bicarbonate, ammonium carbonate, sodium bicarbonate, sodium carbonate, sodium hydroxide, and ammonia;
and/or the second pH regulator is selected from at least one of ammonium bicarbonate, ammonium carbonate, sodium bicarbonate, sodium carbonate, sodium hydroxide, and ammonia.

7. The preparation method of ferric phosphate with low sulfur content and high iron to phosphorus ratio according to any one of claims 1-6, wherein the second filter cake is rinsed multiple times until a conductivity of its rinsing solution is less than or equal to 350 µs/cm, and then the second filter cake is dried and calcined to prepare and obtain the ferric phosphate with low sulfur content and high iron to phosphorus ratio.

8. The preparation method of ferric phosphate with low sulfur content and high iron to phosphorus ratio according to any one of claims 1-7, wherein a pH value of the first slurry is 3.5-4.5.

9. A ferric phosphate with low sulfur content and high iron to phosphorus ratio, prepared using the preparation method of the ferric phosphate according to any one of claims 1-8, wherein
an iron to phosphorus ratio of the ferric phosphate with low sulfur content and high iron to phosphorus ratio is (0.977-0.991):1;
and/or a sulfur content of the ferric phosphate with low sulfur content and high iron to phosphorus ratio is 18.55 ppm-32.46 ppm;
and/or a specific surface area of the ferric phosphate with low sulfur content and high iron to phosphorus ratio is 10.50 m²/g-12.01 m²/g.

10. A cathode sheet, comprising a cathode current collector and a cathode active layer disposed on at least one side of the cathode current collector, wherein the cathode active layer comprises a lithium ferric phosphate material prepared from the ferric phosphate with low sulfur content and high iron to phosphorus ratio according to claim 9 as a precursor.

11. A secondary battery, comprising the cathode sheet according to claim 10.
